# EUROPÄISCHE PATENTSCHRIFT

(11) **EP 2 390 985 B1**
(45) Veröffentlichungstag und Bekanntmachung des Hinweises auf die Patenterteilung: **18.05.2016**
(21) Anmeldenummer: 11159528.6
(22) Anmeldetag: 24.03.2011
(51) Int. Cl.: H02J 13/00, H04L 27/24

(54) **Verfahren zum Betreiben eines elektrischen Installationssystems umfassend eine Hauptstelle und eine daran angeschlossene Nebenstelle**
Method for operating an electric installation system comprising a main station and a connected substation
Procédé de fonctionnement d'un système d'installation électrique comprenant un poste principal et un poste secondaire y étant raccordé

(30) Priorität: 27.05.2010 DE 102010017112
(43) Veröffentlichungstag der Anmeldung: 30.11.2011
(73) Patentinhaber: Insta Elektro GmbH, 58509 Lüdenscheid (DE)
(72) Erfinder: Krause, Karl-Heinz, 58809 Neuenrade (DE)

(56) Entgegenhaltungen:
- EP-A1- 1 289 217
- EP-A2- 0 993 094
- WO-A2-2005/124477
- AT-B- 408 392
- DE-A1- 3 719 670
- DE-A1- 19 845 961
- GB-A- 1 241 860

## Beschreibung

Die Erfindung betrifft ein Verfahren zum Betreiben eines elektrischen Installationssystems, umfassend wenigstens eine an eine zum Ansteuern zumindest einen Aktors vorgesehene Hauptstelle drahtgebunden angeschlossenen Nebenstelle, über welche Nebenstelle die Hauptstelle angesteuert werden kann, für welche Ansteuerung der Hauptstelle durch die Nebenstelle Steuerbefehle auf eine die Nebenstelle mit der Hauptstelle verbindende elektrische Leitung spannungskodiert in eine oder mehrere aufeinander folgende Wechselspannungshalbwellen gleicher Polarität - Befehlshalbwellen - eingeprägt werden.

Bei elektrischen Installationssystemen können die Installationen gleicher oder auch unterschiedlicher Gewerke über ein Bussystem miteinander verbunden sein. Jeder Installation, beispielsweise einer Raumbeleuchtung, einer Jalousieinstallation oder dergleichen ist zumindest eine Hauptstelle zugeordnet, über diese Installation als Aktor angesteuert werden kann. Bei derartigen Installationssystemen sind die Aktoren ebenso wie die Hauptstelle als Busteilnehmer konzipiert und an den Bus angeschlossen. Dieses ermöglicht, dass grundsätzlich von einer Hauptstelle auch unterschiedliche Aktoren angesteuert bzw. bedient werden können.

Neben solchen, über ein Bussystem miteinander in Verbindung stehenden Gebäudeinstallationssystemen werden auch solche installiert, bei denen die Aktoren und dementsprechend die Hauptstellen untereinander nicht notwendigerweise vernetzt sind. Bei einer solchen Ausgestaltung ist typischerweise eine Hauptstelle zum Ansteuern eines Aktors vorgesehen. Eine solche Hauptstelle verfügt über einen Leistungseinsatz, beispielsweise als Relais konzipiert, um den der Hauptstelle zugeordneten Aktor zu schalten. Darüber hinaus verfügt eine solche Hauptstelle über das oder die notwendigen Bedienelemente, die beispielsweise als Taster oder berührungssensitiver Schalter ausgelegt sein können. Um einen an eine solche Hauptstelle angeschlossenen Aktor auch von unterschiedlichen Stellen innerhalb des Gebäudes oder auch innerhalb eines Raumes ansteuern zu können, sind Installationssysteme entwickelt worden, bei denen an eine solche Hauptstelle ein oder mehrere Nebenstellen drahtgebunden angeschlossen sind. Die Neberistellen dienen zum Ansteuern der Hauptstelle, durch die wiederum entsprechend dem jeweiligen in der Nebenstelle eingegebenen Befehlswunsch der Aktor angesteuert wird. Ein solches Installationssystem ist in EP 0 993 094 A2 beschrieben. Bei diesem vorbekannten Installationssystem erfolgt eine Ansteuerung der Hauptstelle durch die Nebenstelle, indem die Steuerbefehle auf eine die Nebenstelle mit der Hauptstelle verbindende elektrische Leitung spannungskodiert übertragen werden. Eingeprägt werden die Steuerbefehle in jeweils eine Halbwelle der anliegenden Wechselspannung, wobei hierfür regelmäßig gleichartige Halbwellen für die Übermittlung der Steuerbefehle genutzt werden. Im Rahmen dieser Ausführungen sind diese für die Steuerbefehlsübermittlung von der Nebenstelle an die Hauptstelle genutzten Halbwellen der anliegenden Wechselspannung als Befehlshalbwellen angesprochen. Genutzt wird für die Steuerbefehlsübermittlung an die Hauptstelle die Netzphase, die typischerweise die Masse der Hauptstelle bildet. Hierzu wird die Spannung an der Nebenstelle gegen die Netzphase festgeklemmt. Durch unterschiedliche Spannungsniveaus können auf diese Weise unterschiedliche Befehle von der Nebenstelle an die Hauptstelle übertragen werden.

Mit diesem aus EP 0 993 094 A2 bekannten Installationssystem ist eine Befehlsübermittlung von einer Nebenstelle an eine Hauptstelle möglich, wobei einer Hauptstelle auch mehrere Nebenstellen zugeordnet sein können. Bei einer solchen Ausgestaltung kann die Hauptstelle von jeder Nebenstelle angesteuert werden. Eine Statusrückmeldung hinsichtlich des Schaltzustandes der Hauptstelle und damit des von dieser angesteuerten Aktors ist bei diesem vorbekannten Installationssystem nicht möglich. Eine Rückmeldung wäre für einen Benutzer wünschenswert, damit er erkennt, ob der von ihm durch Betätigen der Nebenstelle ausgelöste Befehl von der Hauptstelle empfangen und umgesetzt worden ist. Zwar erübrigt sich in manchen Anwendungen eine solche Rückmeldung, beispielsweise dann, wenn Hauptstelle und Nebenstelle in einem gemeinsamen Raum angeordnet sind und die Hauptstelle etwa zum Ansteuern der Raumbeleuchtung dient. Dann ist für einen Benutzer unmittelbar das durch die Befehlseingabe umgesetzte Ergebnis erkennbar. Bei zahlreichen Anwendungen ist dieses jedoch nicht oder nicht ohne weiteres der Fall oder auch möglich. Ein Verfahren wie vorbeschrieben, welches die Merkmale des Oberbegriffs des Anspruchs 1 offenbart, ist aus EP 1 289 217 A1 bekannt.

GB 1 241 860 A sowie AT 408 392 B offenbaren eine Nutzung von positiver und negativer Halbwelle sowie eine Kombination von positiver und negativer Halbwelle, um auf diese Weise drei verschiedene Befehle übertragen zu können.

DE 37 19 670 A1 offenbart für eine bidirektionale Informationsübertragung die Überlagerung von Wechselströmen mit einer Phasenverschiebung von 90 Grad.

WO 2005/124477 A2 offenbart das Einprägen von Signalen in der positiven und negativen Halbwelle eines Versorgungsnetzes zur Übermittlung von Steuersignalen eines Hausgerätesteuersystems. Eine bidirektionale Kommunikation ist darin nicht offenbart.

DE 198 45 961 A beschreibt die Kommunikation von Bewegungsmeldem mittels halbwellenkodierten Signalen, ebenfalls ohne auf eine bidirektionale Kommunikation einzugehen.

Daher besteht somit ausgehend von dem aus EP 1 289 217 A1 bekannt gewordenen Verfahren der Wunsch, ein solches elektrisches Nebenstellen-Installationssystem dergestalt weiterzubilden, dass ohne zusätzlichen Verkabelungsaufwand auch eine Statusrückmeldung hinsichtlich des Schaltstatus der Hauptstelle bzw. des von diesem angesteuerten Aktors an die Nebenstelle möglich ist.

Der Erfindung liegt daher die Aufgabe zugrunde, ein solches Verfahren bereitzustellen.

Gelöst wird diese Aufgabe erfindungsgemäß durch ein eingangs genanntes, gattungsgemäßes Verfahren, bei dem die für die Übertragung der Steuerbefehle von der Nebenstelle an die Hauptstelle nicht genutzte Wechselspannungshalbwelle - die Rückmeldungshalbwelle - zum Übermitteln von Daten von der Hauptstelle an die Nebenstelle genutzt wird, indem die an die Nebenstelle zu übermittelnde Information spannungskodiert in die Rückmeldungshalbwelle, welche eine komplementäre Polarität gegenüber der Befehlshalbwelle (L₍₋₎) aufweist, eingeprägt wird.

Bei diesem Verfahren wird die für die Befehlsübertragung von der Nebenstelle an die Hauptstelle nicht genutzte Halbwelle der anliegenden Wechselspannung als Träger für eine von der Hauptstelle an die Nebenstelle zu übermittelnde Information genutzt. Diese Halbwelle ist im Rahmen dieser Ausführungen als die Rückmeldungshalbwelle angesprochen. Die Rückmeldung von der Hauptstelle an die Nebenstelle erfolgt spannungskodiert durch Einprägen einer Spannung auf die Rückmeldungshalbwelle. Damit kann ein Auslesen der mit einer Rückmeldungshalbwelle von der Nebenstelle empfangenen Information in einfacher Weise durch eine Spannungsmessung oder eine Spannungsvergleichsmessung, ob die Spannung der Rückmeldungshalbwelle oberhalb oder unterhalb einer Schwellwertspannung liegt, erfolgen. Bei diesem Konzept kann auch eine Rückmeldungshalbwelle, auf die keine Spannung aufgeprägt ist, eine Information beinhalten. Für den Fall, dass beispielsweise eine Statusrückmeldung von zwei möglichen Schaltzuständen vorgesehen ist, kann der eine Schaltzustand durch Einprägen einer Spannung auf die Rückmeldungshalbwelle signalisiert werden, während zum Übermitteln des anderen Schaltzustandes die Rückmeldungshalbwelle ohne eingeprägte Spannung verwendet wird. Bei einer solchen Ausgestaltung wird man vorzugsweise eine Spannung in die Rückmeldungshalbwelle einprägen, wenn der Schaltstatus "an" ist. Ist der Schaltstatus "aus", wird auf die Rückmeldungshalbwelle keine Spannung eingeprägt. Auf diese Weise können in einfacher Weise als Statusmeldung zwei Zustände an die Nebenstelle übermittelt werden.

Die Nebenstelle selbst verfügt, wie bereits angedeutet, über Mittel, mit denen die Rückmeldungshalbwellen hinsichtlich einer in diese eingeprägten Spannung ausgelesen und nutzerseitig angezeigt werden kann. Ein solches Anzeigen der empfangenen Statusinformation wird typischerweise optisch und/oder akustisch angezeigt.

Bevorzugt ist eine Ausgestaltung, bei der jede Rückmeldungshalbwelle als Informationsträger für die vorbeschriebene Rückmeldung des Schaltstatus der Hauptstelle an die Nebenstelle dient. Sollen mehr als zwei unterschiedliche Schaltstellungen hinsichtlich ihres Status an die Nebenstelle übermittelt werden, kann vorgesehen sein, dass die durch die Hauptstelle in die Rückmeldungshalbwelle eingeprägte Spannung je nach zu übermittelnder Statusinformation in unterschiedlicher Höhe eingeprägt wird. Dementsprechend ist die Nebenstelle ausgestattet, die unterschiedlichen Spannungsniveaus einer Rückmeldungshalbwelle erkennen und unterscheiden zu können.

Da unterschiedliche Spannungshöhen für eine Rückmeldung genutzt werden können, besteht die Möglichkeit in die Rückmeldungshalbwelle von der Hauptstelle zur Nebenstelle einen Grundpegel einzuspeisen, über den dann eine Nebenstelle als sogenannte Zwei-Draht-Nebenstelle versorgt werden kann. Die Rückmeldeinformation wird dann auf diesen Grundpegel aufgeprägt und liegt somit bei einer solchen Ausgestaltung über dem Grundpegel.

Vor dem Hintergrund, dass die Statusrückmeldungsinformation typischerweise über die gesamte Rückmeldungshalbwelle vorhanden ist, kann von der Nebenstelle grundsätzlich zu jedem Zeitpunkt der Rückmeldungshalbwelle die Statusinformation ausgelesen werden. Um Fehler beim Auslesen der in einer Rückmeldungshalbwelle enthaltenen Information zu vermeiden, ist es vorteilhaft, vor dem Vorgang des Auslesens dieser Information, d.h. vor der Spannungsmessung durch die Nebenstelle, die für die Informationsübertragung genutzte Leitung kurzzeitig mit einer Impedanz zu belasten. Hierdurch werden unter Umständen in die Leitung eingebrachte Einkopplungen beseitigt, die die Spannungsmessung in der Nebenstelle beeinflussen könnten.

Die Steuerbefehle der Nebenstelle an die Hauptstelle und dementsprechend umgekehrt die Statusrückmeldung wird typischerweise auf die Netzphase eingeprägt. Dabei hat es sich als vorteilhaft herausgestellt, wenn zur Übertragung der Steuerbefehle von der Nebenstelle an die Hauptstelle die negative Halbwelle der Netzphase verwendet wird, und wenn dementsprechend die positive Halbwelle die Rückmeldungshalbwelle ist.

Je nach Ausgestaltung des Installationssystems kann vorgesehen sein, dass von der Nebenstelle die Statusinformation aus einer Rückmeldungshalbwelle zu einem vorbestimmten Zeitpunkt innerhalb dieser Halbwelle ausgelesen wird. Bei einer solchen Ausgestaltung wird man Sorge dafür tragen, dass Hauptstelle und Nebenstelle netzsynchron zueinander arbeiten.

Verfügt ein solches Installationssystem über mehrere Nebenstellen, kann von allen Nebenstellen die Statusrückmeldung aus den Rückmeldungshalbwellen ausgelesen werden, auch dann, wenn ein vorangegangener Steuerbefehl von einer Nebenstelle nicht ausgelöst worden ist, sondern von einer anderen zu dieser Installation gehörenden Nebenstelle.

Ebenso wie an eine Hauptstelle mehrere Nebenstellen drahtgebunden angeschlossen sein können, können an eine oder mehrere Nebenstellen ebenfalls mehrere Hauptstellen angeschlossen sein. Von einer solchen Nebenstelle können sodann alle Hauptstellen angesteuert werden. Da jede dieser Hauptstellen ausgelegt ist, ein Schaltstatussignal auf die Rückmeldungshalbwelle aufzuprägen, kann von der Nebenstelle eine Auflösung der Schaltstellung einer einzelnen Hauptstelle nicht erfolgen. Sind über ein Kommunikationssystem, beispielsweise ein Bussystem, mehrere Hauptstellen miteinander verbunden, können diese je nach Auslegung des Systems gemeinsam von einer solchen Nebenstelle angesteuert werden.

Aus der vorstehenden Beschreibung des beanspruchten Verfahrens wird deutlich, dass sich dieses mit der typischerweise ohnehin eingesetzten, bisherigen 3-Draht-Nebenstellentechnik realisieren lässt. Daher kann eine vorhandene Installation, zumindest soweit dieses die Verbindungsleitungen betrifft, weiter genutzt werden und muss insbesondere nicht um zusätzliche Signal- oder Datenübertragungsleitungen erweitert werden.

Weitere Vorteile und Ausgestaltungen der Erfindung ergeben sich aus der nachfolgenden Beschreibung eines Ausführungsbeispiels unter Bezugnahme auf die beigefügten Figuren. Es zeigen:

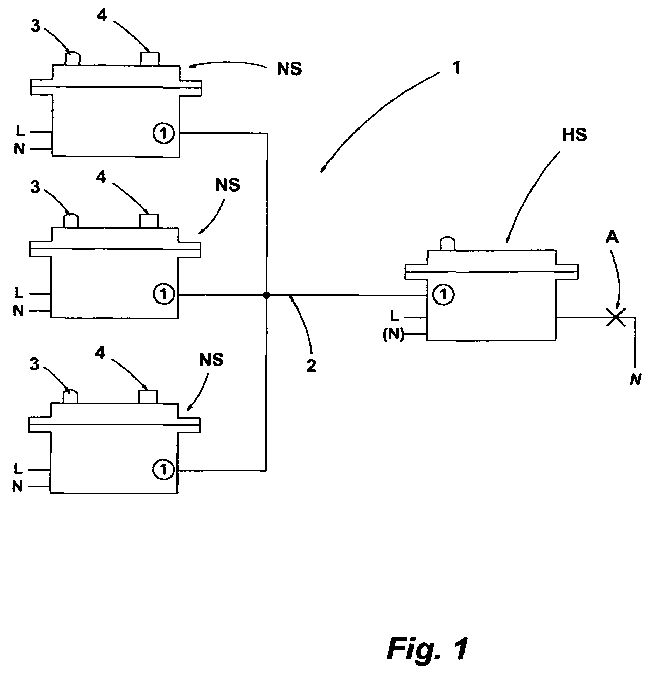

- **Fig 1:**: Eine schematisierte Darstellung eines elektrischen Installationssystems umfassend eine Hauptstelle und mehrere drahtgebunden daran angeschlossene Nebenstellen,
- **Fig 2:**: Eine schematisierte Darstellung von zwei aufeinander folgenden Halbwellen zur Erläuterung der Informationsübermittlung von einer Nebenstelle der Figur 1 an die Hauptstelle und in umgekehrter Richtung,
- **Fig 3:**: Ein schematisiertes Blockschaltbild eines Teils einer Nebenstelle der Figur 1 und
- **Fig 4:**: Ein Schaltungsbeispiel einer an eine Hauptstelle angeschlossenen Nebenstelle.

Ein elektrisches Installationssystem 1 umfasst bei dem dargestellten Ausführungsbeispiel eine Hauptstelle HS sowie mehrere Nebenstellen NS. Die Hauptstelle HS verfügt über ein Leistungsteil, beispielsweise ein Relais, mit dem ein Aktor A eines nicht näher dargestellten Installationssystems angesteuert werden kann. Bei diesem Aktor kann es sich letztendlich um jedweden Aktor eines elektrischen Installationssystems, beispielsweise eines Beleuchtungssystems, einer Klimaanlage, einer Beschattungseinrichtung oder dergleichen handeln. Bei einem Beleuchtungssystem kann es sich bei dem Aktor beispielsweise um einen Dimmer handeln. Die Hauptstelle HS ist mit den Nebenstellen NS über eine Nebenstellenleitung 2 verbunden. Auf der Nebenstellenleitung 2 liegt Netzspannung an. Die Nebenstellen NS sind an unterschiedlichen Orten innerhalb eines Gebäudes oder Raumes angeordnet und dienen zum Ansteuern der Hauptstelle HS und damit des an die Hauptstelle HS angeschlossenen Aktors A. Bei dem dargestellten Ausführungsbeispiel ist der Aktor A auch von der Hauptstelle selbst betätigbar. Bei anderen Ausführungsbeispielen ist dieses nicht der Fall. Dann erfolgt eine Betätigung des Aktors nur durch die eine oder die mehreren Nebenstellen des Installationssystems.

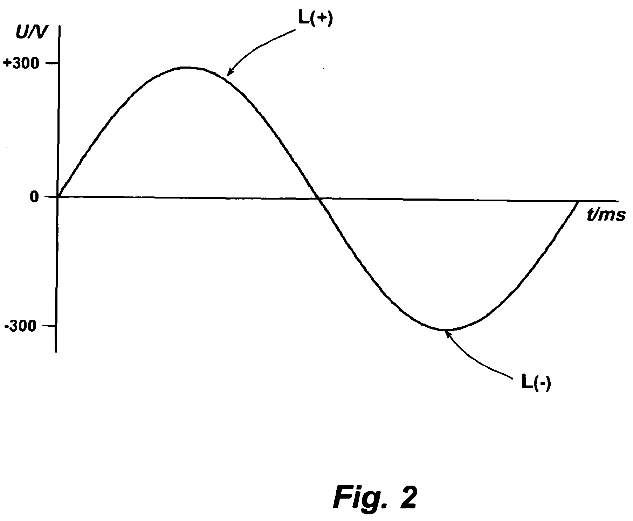

Eine Nebenstelle NS verfügt über eine Betätigungseinrichtung, beispielsweise einen Taster 4 zum Bedienen der Nebenstelle. Eine Tasterbetätigung wird als Steuerbefehl spannungscodiert über die Nebenstellenleitung 2 an die Hauptstelle HS übermittelt. Zu diesem Zweck verfügt die Nebenstelle NS über eine Einrichtung oder Schaltung, um eine Spannung auf die auf der Nebenstellenleitung 2 anliegende Wechselspannung einzuprägen. Eingeprägt wird das Steuersignal nur auf gleichartigen Halbwellen, diejenigen Halbwellen, die im Rahmen dieser Ausführungen als Befehlshalbwellen angesprochen sind. Bei dem dargestellten Ausführungsbeispiel wird diejenige Halbwelle, in der L die Masse der Hauptstelle bildet zum Einprägen der Steuerbefehlsinformation genutzt. Bei dieser Halbwelle handelt es sich, wie aus Figur 2 erkennbar, um die negative Halbwelle L(-). Die Nebenstelle NS des dargestellten Ausführungsbeispiels ist konzipiert, um in Abhängigkeit von der Tasterbetätigung, das heißt in Abhängigkeit von der Dauer einer Tasterbetätigung unterschiedlich hohe Spannungen in die Befehlshalbwelle L(-) einzuprägen. Dieses geschieht durch Festklemmen der Spannung an der Nebenstelle NS gegen L. Realisieren lassen sich auf diese Weise ohne weiteres zahlreiche, hinsichtlich ihrer Höhe unterschiedliche Spannungen, die in die Befehlshalbwelle L(-) eingeprägt werden. Jede Spannung dient für einen unterschiedlichen Steuerbefehl. In einer alternativen Ausgestaltung ist vorgesehen, mehrere, beispielsweise zwei Taster an der Nebenstelle vorzusehen, um beispielsweise ein gezieltes Dimmen in der einen sowie in der anderen Richtung mit unterschiedlichen Spannungshöhen als Steuerbefehlsinformation, je nachdem welcher Taster betätigt wird, zu bewirken.

Die Nebenstelle NS verfügt des Weiteren über eine Einrichtung zum Erfassen von auf die Befehlshalbwellen folgenden bzw. nachfolgenden, komplementären Halbwellen - die Rückmeldungshalbwellen L(+) - eingeprägte Information. Dieses kann durch eine Spannungsmessung erfolgen. Ferner verfügt die Nebenstelle NS über Anzeigemittel zum Anzeigen der von der Hauptstelle HS an die Nebenstelle NS übermittelten Information, bei der es sich im vorliegenden Fall um eine Statusinformation hinsichtlich des Schaltstatus des Aktors A handelt. Als Anzeigemittel dient bei der Nebenstelle NS eine LED 3 durch die die Schaltstellung des Aktors A angezeigt wird. Im beschriebenen Fall ist vorgesehen, dass die Schaltzustände des Aktors A "an" und "aus" angezeigt werden. Ist der Aktor A "an" leuchtet die LED 3. Ist der Aktor A "aus" leuchtet die LED 3 nicht. Die Informationsübermittlung von der Hauptstelle HS an die Nebenstelle NS - gleiches gilt für alle Nebenstellen NS, die an die Nebenstellenleitung 2 angeschlossen sind - wird auf die Rückmeldungshalbwelle L(+) die Statusinformation spannungscodiert eingeprägt. Bei dem dargestellten Ausführungsbeispiel wird im "Aus"-Zustand des Aktors in der Rückmeldungshalbwelle L(+) kein Signal ausgesendet. Umgekehrt: ist der Aktor A "an" wird auf die Rückmeldungshalbwelle L(+) eine Spannung eingeprägt. Die Kodierung wird über die gesamte Rückmeldungshalbwelle L(+) in diese eingeprägt. Pro Rückmeldungshalbwelle L(+) wird somit jeweils ein Bit übertragen.

Um eine Spannungsmessung in der Nebenstelle NS zum Auslesen einer spannungscodierten, auf die Rückmeldungshalbwelle L(+) aufgeprägten Information nicht zu verfälschen oder anderweitig zu beeinträchtigen, ist vorgesehen, dass vor dem Messen durch die Nebenstelle NS einer Statusinformation auf der Rückmeldungshalbwelle L(+) die Nebenstellenleitung 2 mit einer Impedanz durch die Nebenstelle NS belastet wird. Hierdurch werden eingekoppelte Fremdspannungen (Einkopplungen) eliminiert.

Da das Rückmeldungssignal über die gesamte Rückmeldungshalbwelle L(+) in diese eingeprägt ist, kann dieses in jedem Zeitpunkt der Rückmeldungshalbwelle L(+) ausgelesen werden. Bei dem dargestellten Ausführungsbeispiel erfolgt das Auslesen der Rückmeldungshalbwelle L(+) in einem vorbestimmten Zeitpunkt der Halbwelle. Hierzu werden die Nebenstelle NS und die Hauptstelle HS oder zum Parallelbetrieb mehrerer Hauptstellen HS an zumindest einer Nebenstelle NS netzsynchron betrieben.

Zur Übermittlung eines Steuerbefehls von der Nebenstelle NS an die Hauptstelle HS wird zunächst ein Introtelegramm generiert und an die Hauptstelle HS auf der Befehlshalbwelle L(-) ausgesendet. Ein solches Introtelegramm besteht aus einer solchen Befehlsfolge (Betätigungsfolge), die durch eine manuelle Betätigung des Tasters der Nebenstelle NS nicht generiert werden kann. Die für die Generierung eines solchen Introtelegramms genutzten Variablen können beispielsweise Betätigungsgeschwindigkeit und Betätigungsfolge sein. Mit einem solchen Introtelegramm wird der Hauptstelle signalisiert, dass erweiterte, mittels Logik erzeugte Steuerbefehle von der Nebenstelle NS folgen. Insofern muss die Hauptstelle HS zwischen Befehlen, die unmittelbar an der Hauptstelle eingegeben werden und solchen, die sie durch die Nebenstelle NS oder eine der Nebenstellen NS empfängt, unterscheiden. Zum Auslesen der auf der Befehlshalbwelle L(-) übermittelten Steuerinformation verfügt diese über geeignete und an sich bekannte Mittel. Hierbei kann es sich beispielsweise um Spannungsmessrichtungen oder -schaltungen handeln.

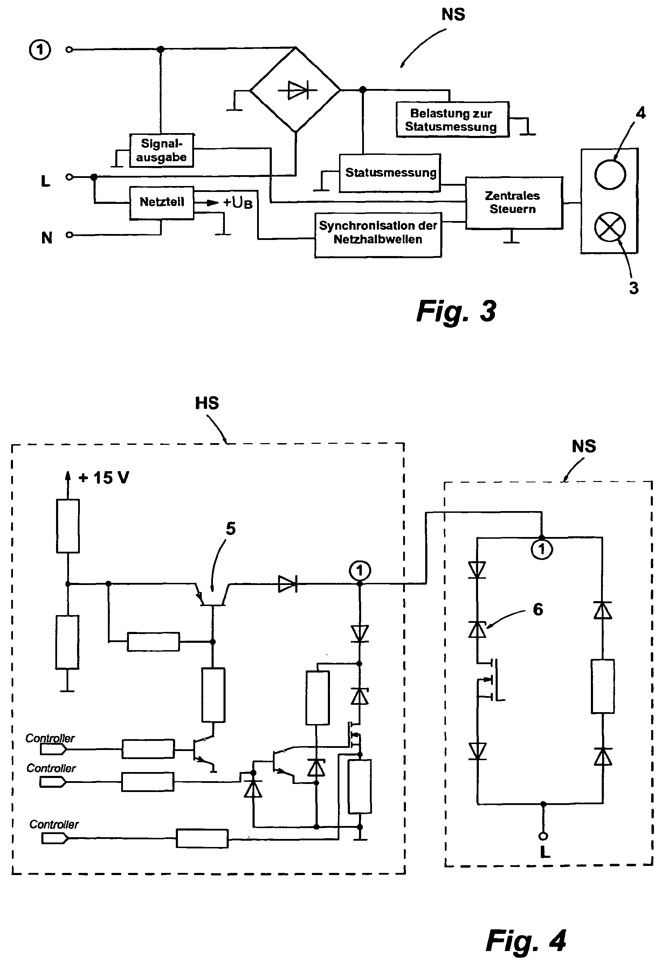

Figur 3 zeigt in einem Blockschaltbild die Nebenstelle NS. Diese ist, wie vorbeschrieben, als 3-Draht-Gerät ausgelegt. Die Nebenstellenleitungsklemme der Nebenstelle NS ist in dieser Figur mit ① kenntlich gemacht. Die wesentlichen Elemente der Nebenstelle NS sind in der Figur bezeichnet. Der bereits vorbeschriebene Taster für die Bedienung der Nebenstelle ist mit dem Bezugszeichen 4, die LED mit dem Bezugszeichen 3 gekennzeichnet.

Der Schaltbildauszug einer Hauptstelle HS und einer Nebenstelle NS in Figur 4 zeigen den vergleichsweise einfachen Aufbau der für die Signalübermittlung eingesetzten Komponenten. Bei dem dargestellten Ausführungsbeispiel der Hauptstelle HS ist diese als Dimmer konzipiert, mithin der Aktor eine Beleuchtungseinrichtung. Bei der Verwendung von mehreren Hauptstellen ist zur Vermeidung von Querströmen von den Nebenstellenbedienungsmessungen ein spannungsfester Transistor 5 vorgesehen, der in derjenigen Zeit, in der eine Nebenstellenabfrage durch die Hauptstelle nicht erfolgt, diese trennt.

Zum Einprägen unterschiedlicher Spannungen in die Befehlshalbwelle L(-) verfügt die Nebenstelle NS über mehrere Z-Dioden, die in Figur 4 stellvertretend durch die Z-Diode 6 dargestellt sind.

In gleicher Weise wie vorbeschrieben können durch eine oder mehrere Nebenstellen mehrere Hauptstellen angesteuert werden. Diese sind sodann alle gemeinsam an die eine Nebenstellenleitung angeschlossen. Um bei einer solchen Ausgestaltung Ansteuerungsfehler durch beispielsweise unterschiedliche Leitungslängen zwischen der Nebenstelle und den unterschiedlichen Hauptstellen zu vermeiden, ist in einer Ausgestaltung vorgesehen, ein zur Ansteuerung einer Hauptstelle zeitcodiertes Betätigungssignal durch die Nebenstelle zu manipulieren. Zur Unterscheidung einer Tasterbetätigung zwischen der Funktion "Schalten" und der Funktion "Dimmen" wird üblicherweise die Länge der Tastbetätigung ausgewertet. Bei einer Kurzbetätigung, beispielsweise eine Betätigung bis 400 ms wird dies als Schaltbetätigung ausgewertet. Unterschieden hiervon werden sogenannte Langbetätiguhgen, also Betätigungen des Tasters, die länger als 400 ms dauern. Derartige Tasterbetätigungen werden als Dimmbetätigungen verstanden. Eine derartige Codierung ist, wenn von einer Nebenstelle nur eine Hauptstelle angesteuert wird, durch die vordefinierte Zeitschwelle, die im vorbeschriebenen Ausführungsbeispiel mit 400 ms angegeben ist, eindeutig zwischen den beiden Betätigungen unterscheidbar. Sind jedoch mehrere Hauptstellen von einer Nebenstelle angesteuert, kann eine Tasterbetätigung, die im Bereich der vordefinierten Wechselzeit angesiedelt ist, zu unterschiedlichen Ausleseergebnissen bei den Hauptstellen führen. Zu diesem Zweck wird der Bereich der Wechselzeit von der Nebenstelle "künstlich" verlängert. Wird beispielsweise die Betätigung einer Nebenstelle nach 385 ms beendet, verlängert die Nebenstelle die Betätigung "kunstlich auf 420 ms", um zu gewährleisten dass alle angeschlossenen Hauptstellen diese Betätigung gleich auswerten.

Angezeigt wird der Schaltstatus eines von einer solchen Hauptstelle angesteuerten Aktors, beispielsweise durch Bestromen einer LED wenn der Schaltstatus zumindest eines des durch eine an die Nebenstelle angeschlossenen Hauptstelle angesteuerten Aktors "an" ist. Dieser Schaltstatus wird als Information auf die Rückmeldungshalbwelle aufgeprägt.

### Bezugszeichenliste

- 1: Installationssystem
- 2: Nebenstellenleitung
- 3: LED
- 4: Taster
- 5: Transistor
- 6: Z-Diode
- A: Aktor
- HS: Hauptstelle
- NS: Nebenstelle
- L(-): Befehlshalbwelle
- L(+): Rückmeldungshalbwelle
- ①: Nebenstellenleitungsklemme

## Patentansprüche

1. Verfahren zum Betreiben eines elektrischen Installationssystems (1), umfassend wenigstens eine an eine zum Ansteuern zumindest einen Aktors (A) vorgesehene Hauptstelle (HS) drahtgebunden angeschlossenen Nebenstelle (NS), über welche Nebenstelle (NS) die Hauptstelle (HS) angesteuert werden kann, für welche Ansteuerung der Hauptstelle (HS) durch die Nebenstelle (NS) Steuerbefehle auf eine die Nebenstelle (NS) mit der Hauptstelle (HS) verbindende elektrische Leitung (2) spannungskodiert in eine oder mehrere aufeinander folgende Wechselspannungshalbwellen gleicher Polarität - Befehlshalbwellen (L(-)) - eingeprägt werden, **dadurch gekennzeichnet, dass** die für die Übertragung der Steuerbefehle von der Nebenstelle (NS) an die Hauptstelle (HS) nicht genutzte Wechselspannungshalbwelle - die Rückmeldungshalbwelle (L(+)), welche eine komplementäre Polarität gegenüber der Befehlshalbwelle (L(-)) aufweist - zum Übermitteln von Daten von der Hauptstelle (HS) an die Nebenstelle (NS) genutzt wird, indem die an die Nebenstelle (NS) zu übermittelnde Information spannungskodiert in die Rückmeldungshalbwelle (L(+)) eingeprägt wird.

2. Verfahren nach Anspruch 1, **dadurch gekennzeichnet, dass** die an die Nebenstelle (NS) zu übermittelnde Information in jede Rückmeldungshalbwelle (L(+)) eingeprägt wird.

3. Verfahren nach Anspruch 1 oder 2, **dadurch gekennzeichnet, dass** als Rückmeldeinformation eine Information über den Schaltstatus des von der Hauptstelle (HS) angesteuerten Aktors (A), insbesondere ob dieser ein- oder ausgeschaltet ist, in die Rückmeldungshalbwelle (L(+)) eingeprägt wird und dass von der Nebenstelle (NS) die übermittelte Schaltstatusinformation angezeigt wird.

4. Verfahren nach Anspruch 3, **dadurch gekennzeichnet, dass** zum Kenntlichmachen der Schaltstatusinformation, von der Nebenstelle (NS) ein optisches Signal bereitgestellt wird, etwa durch eine LED (3).

5. Verfahren nach Anspruch 3 oder 4, **dadurch gekennzeichnet, dass** von der Hauptstelle (HS) eine Spannung auf die Rückmeldungshalbwelle (L(+)) aufgeprägt wird, wenn der Schaltstatus des Aktors (A) "an" ist, und dass von der Hauptstelle (HS) keine Spannung auf die Rückmeldehalbwelle (L(+)) aufgeprägt wird, wenn der Schaltstatus des Aktors (A) "aus" ist.

6. Verfahren nach Anspruch 4, **dadurch gekennzeichnet, dass** von der Hauptstelle (HS) eine Spannung auf die Rückmeldungshalbwelle (L(+)) aufgeprägt wird, wenn der Schaltstatus des Aktors (A) "an" ist, dass von der Hauptstelle (HS) keine Spannung auf die Rückmeldehalbwelle (L(+)) aufgeprägt wird, wenn der Schaltstatus des Aktors (A) "aus" ist, und dass die LED (3) bestromt wird, wenn der auf der Rückmeldungshalbwelle (L(+)) aufgeprägte Schaltstatus des durch die Hauptstelle (HS) angesteuerten Aktors (A) "an" ist.

7. Verfahren nach einem der Ansprüche 1 bis 6, **dadurch gekennzeichnet, dass** in die Rückmeldungshalbwelle (L(+)) ein Grundpegel zur Versorgung zumindest einer Nebenstelle eingespeist wird, wobei die auf der Rückmeldungshalbwelle (L(+)) zu übermittelnde Information spannungscodiert auf diesen Grundpegel aufgeprägt wird.

8. Verfahren nach einem der Ansprüche 1 bis 7, **dadurch gekennzeichnet, dass** das Auslesen der in einer Rückmeldungshalbwelle (L₍₊₎) enthaltenen Information durch die Nebenstelle (NS) zu einem vordefinierten Zeitpunkt innerhalb dieser Halbwelle (L(+)) netzsynchron mit der Hauptstelle (HS) erfolgt.

9. Verfahren nach einem der Ansprüche 1 bis 8, **dadurch gekennzeichnet, dass** vor dem Auslesen der spannungskodierten, von der Hauptstelle (HS) an die Nebenstelle (NS) übermittelten Information aus der Rückmeldungshalbwelle (L(+)) die für die Informationsübertragung genutzte Leitung (2) mit einer Impedanz belastet wird.

10. Verfahren nach einem der Ansprüche 1 bis 9, **dadurch gekennzeichnet, dass** vor der Übermittlung eines Steuerbefehls von der Nebenstelle (NS) an die Hauptstelle (HS) ein Introtelegramm auf mehreren aufeinanderfolgenden Befehlshalbwellen zum Ankündigen einer Befehlsübermittlung übertragen wird.

## Claims

1. Process for operating an electrical installation system (1), incorporating at least one substation (NS) which is attached by a wire connection to a master station (HS) provided for controlling at least one actuator (A), with the master station (HS) capable of being actuated by way of the said substation (NS), for which actuation of the master station (HS) by the substation (NS) control commands are applied to an electrical line (2) connecting the substation (NS) to the master station (HS) in a voltage-coded manner in one or more successive half-cycles of alternating voltage of the same polarity - command half-cycles (L₍₋₎), **characterised in that** the alternating voltage half-cycle that is not used for transmitting the control commands from the substation (NS) to the master station (HS) - the feedback half-cycle (L₍₊₎) which has a polarity complementary to the command half-cycle (L₍₋₎) - is used for transmitting data from the master station (HS) to the substation (NS) by the information to be transmitted to the substation (NS) being applied in a voltage-coded manner to the feedback half-cycle (L₍₊₎).

2. Process according to Claim 1, **characterised in that** the information to be transmitted to the substation (NS) is applied to each feedback half-cycle (L₍₊₎).

3. Process according to Claim 1 or Claim 2, **characterised in that** an item of information on the switching status of the actuator (A) controlled by the master station (HS), in particular whether it is switched on or switched off, is applied to the feedback half-cycle (L₍₊₎) as feedback information and that the transmitted switching status information is displayed by the substation (NS).

4. Process according to Claim 3, **characterised in that** an optical signal, for instance by means of an LED (3), is provided for the purpose of identifying the switching status information from the substation (NS).

5. Process according to Claim 3 or Claim 4, **characterised in that** a voltage is applied to the feedback half-cycle (L₍₊₎) by the master station (HS) if the switching status of the actuator (A) is "on" and that no voltage is applied to the feedback half-cycle (L₍₊₎) by the master station (HS) if the switching status of the actuator (A) is "off'.

6. Process according to Claim 4, **characterised in that** a voltage is applied to the feedback half-cycle (L₍₊₎) by the master station (HS) if the switching status of the actuator (A) is "on", that no voltage is applied to the feedback half-cycle (L₍₊₎) by the master station (HS) if the switching status of the actuator (A) if "off', and that the LED (3) is energised if the switching status applied to the feedback half-cycle (L₍₊₎) of the actuator (A) controlled by the master station (HS) is "on".

7. Process according to any of Claims 1 to 6, **characterised in that** a basic level for supplying power to at least one substation is fed into the feedback half-cycle (L₍₊₎), for which purpose the information to be transferred to the feedback half-cycle (L₍₊₎) is applied to this basic level in a voltage-coded manner.

8. Process according to any of Claims 1 to 7, **characterised in that** the read-out by the substation (NS) of the information contained in a feedback half-cycle (L₍₊₎) is carried out at a predefined point of time within this half-cycle (L₍₊₎) mains-synchronous with the master station (HS).

9. Process according to any of Claims 1 to 8, **characterised in that**, prior to reading out the voltage-coded information from the feedback half-cycle (L₍₊₎) transferred by the master station (HS) to the substation (NS), the line (2) used for transferring the information is loaded with an impedance.

10. Process according to any of Claims 1 to 9, **characterised in that**, prior to a control command being transferred from the substation (NS) to the master station (HS), an intro-telegram is transmitted to a plurality of successive command half-cycles to signalise the transmission of a command.

## Revendications

1. Procédé pour exploiter un système d'installation électrique (1), comprenant au moins un poste secondaire (NS) relié par fil à un poste principal (HS) prévu pour piloter au moins un actuateur (A), le poste principal (HS) peut être piloté via ce poste secondaire (NS), des instructions de commande sont appliquées avec codage de tension pour ce pilotage du poste principal (HS) par le poste secondaire (NS) via une ligne électrique (2) reliant le poste secondaire (NS) au poste principal (HS) en une ou plusieurs demi-ondes de tension alternative successives de même polarité - demi-ondes d'instruction (L₍₋₎) - **caractérisé en ce que** la demi-onde de tension alternative inutilisée pour le transfert des instructions de commande du poste secondaire (NS) au poste principal (HS) - la demi-onde de message de réponse (L₍₊₎) qui présente une polarité complémentaire de la demi-onde d'instruction (L₍₋₎) **en ce que** l'information à transmettre au poste secondaire (NS) est appliquée avec codage de tension dans la demi-onde de message de réponse (L₍₊₎).

2. Procédé selon la revendication 1 **caractérisé en ce que** l'information à transmettre au poste secondaire (NS) est appliquée dans chaque demi-onde de message de réponse (L₍₊₎).

3. Procédé selon la revendication 1 ou **caractérisé en ce que**, en tant qu'information de message de réponse, une information sur l'état de commutation de l'actuateur (A) piloté par le poste principal (HS), en particulier si cet actuateur est en circuit ou hors circuit, est appliquée dans la demi-onde de message de réponse (L₍₊₎) et que l'information d'état de commutation transmis est affiché par le poste secondaire (NS).

4. Procédé selon la revendication 3 **caractérisé en ce que**, pour identifier l'information d'état de commutation, le poste secondaire (NS) émet un signal optique, par exemple via une DEL (3).

5. Procédé selon la revendication 3 ou 4 **caractérisé en ce qu'**une tension sur la demi-onde de message de réponse (L₍₊₎) est appliquée par le poste principal (HS) lorsque l'état de commutation de l'actuateur (A) est « En Marche » et qu'aucune tension n'est appliquée par le poste principal (HS) sur la demi-onde de message de réponse (L₍₊₎) lorsque l'état de commutation de l'actuateur (A) est « Arrêt ».

6. Procédé selon la revendication 4 **caractérisé en ce qu'**une tension sur la demi-onde de message de réponse (L₍₊₎) est appliquée par le poste principal (HS) lorsque l'état de commutation de l'actuateur (A) est « En Marche », qu'aucune tension n'est appliquée par le poste principal (HS) sur la demi-onde de message de réponse (L₍₊₎) lorsque l'état de commutation l'actuateur (A) est « Arrêt » et que la DEL (3) est parcourue par le courant, lorsque l'état de commutation appliqué sur la demi-onde de message de réponse (L₍₊₎) de l'actuateur (A) piloté par le poste principal (HS) est « En marche ».

7. Procédé selon l'une des revendications 1 à 6 **caractérisé en ce que**, dans la demi-onde de message de réponse (L₍₊₎), un niveau de base d'alimentation d'au moins un poste secondaire est alimenté, ce faisant l'information à transmettre sur la demi-onde de message de réponse (L₍₊₎) est appliquée avec codage de tension sur ce niveau de base.

8. Procédé selon l'une des revendications 1 à 7 **caractérisé en ce que** la lecture de l'information à codage de tension, transmise par le poste principal (HS) contenue dans une demi-onde de message de réponse (L₍₊₎) est effectuée par le poste secondaire (NS) à un moment prédéfini dans cette demi-onde (L₍₊₎), en synchronisation de réseau avec le poste principal (HS).

9. Procédé selon l'une des revendications 1 à 8 **caractérisé en ce qu'**avant la lecture de l'information transmise par le poste principal (HS) au poste secondaire (NS) avec codage de tension de la demi-onde de message de réponse (L₍₊₎), la ligne (2) utilisée pour la transmission de l'information est chargée d'une impédance.

10. Procédé selon l'une des revendications 1 à 9 **caractérisé en ce qu'**avant la transmission d'une instruction de commande du poste secondaire (NS) au poste principal (HS), un introtélégramme est transmis sur plusieurs demi-ondes d'ordres successives pour annoncer une transmission d'instruction.
